# EUROPÄISCHE PATENTANMELDUNG

(11) **EP 0 955 142 A1**
(43) Veröffentlichungstag der Anmeldung: **10.11.1999**
(21) Anmeldenummer: 98201070.4
(22) Anmeldetag: 06.05.1998
(51) Int. Cl.: B29B 17/00, B02C 18/44

(54) **Mobile Vorrichtung zur Kunststoffrückgewinnung**

(71) Anmelder: Putzki, Michael, 34466 Wolfhagen (DE)
(72) Erfinder: Putzki, Michael, 34466 Wolfhagen (DE)

(57) **Zusammenfassung**

Eine mobile Recyclingeinheit für Kunststoffe umfasst zwei Mantelwalzen. Auf den Mänteln der Walzen ist eine Zahnung angebracht, mit der das Kunststoffmaterial gedrückt und granuliert wird.

## Beschreibung

### Vorteile gegenüber der derzeitigen Granulat Rückgewinnung !

⊙ Der Kunde braucht nicht mehr für die teure Entsorgung von Kunststoff zu bezahlen.
⊙ Der Kunde spart durch unser Mobiles Recyclingprogramm, nach der Verarbeitung die Kosten für die Wiederbeschaffung des gleichen Materials.
⊙ Dem Kunden steht das Granulat nach der Verarbeitung durch uns sofort wieder zur Verfügung. ( Kostenvergleich **Entsorgung / Einkauf------- Kosten für Mobile Kunststoffgranulierung**)

### BESCHREIBUNG ABLAUF IN STICHPUNKTEN:

⊙ Planung und Zeichnung der Mobilenmühleinheit.
⊙ Einholen von Preisen für Material und Maschienenzubehör.
⊙ Einholen von Einkaufspreisen Kunststoffgranulat.
⊙ Einholen von Preisen für einen Lkw mit Ladekran.
⊙ Kalkulation und Rentabilitätsschätzung und die Abwägung der Vorteile dieses Projekts.
⊙ Beschaffung von Geldmitteln / durch Arbeitsamt / Umweltförderprogramme / Wirtschaftsförderprogramme bei der deutschen Ausgleichsbank und oder durch einen Partner.
⊙ Beschaffung von Räumen zum Bau des Prototyps ( Mobilemühleneinheit ).
⊙ Beschaffung des Materials zum Bau des Prototyps.
⊙ Bau des Prototyps.
⊙ Testlauf der Maschine stationär ( 72 Std. Dauertest ).
⊙ Beschaffung des Lkw mit Ladekran.
⊙ Beschaffung des Stromagregats.
⊙ Montage des Stromagregats und der Mobilenmühleneinheit auf dem Lkw.
⊙ Abnahme des Lkw mit montierten Maschinen.
⊙ Anmeldung des Gesamtprojektes zum Patent und Schutz des Projekts.
⊙ Werbung in Fachzeitschriften und Arbeitsaufnahme.

### Projektbeschreibung

### Zukünftiges Firmenprofil

Die Firma soll sich grundsätzlich mit der Mobilen Kunststoffgranulierung beschäftigen wobei hierfür die eigens für diesen Zweck entwickelte Mobilemühleinheit von Mir entwickelt wurde.

Die Mobilemühleneinheit befindet sich fest montiert auf der Ladefläche eines Lkw mit Ladekran und einer Nutzlast von max. 3,0 t und wird durch den Motor des Lkw' s betrieben.

Wir fahren mit der Mobilenmühleneinheit die Kunststoffverarbeitende Industrie an um den vorhandenen Kunststoffabfall der bei der Produktion von Kunststoffteilen anfällt wieder in Granulat zu mahlen und dem Unternehmen dann wieder zur Verfügung zustellen. (Siehe auch **Diagram** Kosten Auftraggeber für Einkauf / Verkauf)

### Die geschieht wie folgt :

1) Der Lkw fährt neben den Container mit dem Sortierten Kunststoffabfall.
2) Der Ladekran füllt die Mobilemühleneinheit mit dem Kunststoffabfall.
3) Die Mobilemühleneinheit mahlt den Kunststoffabfall zu der gängigen Granulatkörnung.
4) Ein Mitarbeiter steht an der Rutsche die aus der Maschine kommt und füllt dort das Granulat in durchsichtige Plastiksäcke ab.
5) Nach ca. 55 Min ist ein Container mit ca. 7,5 to. Wieder zu Granulat verarbeitet und steht dem Unternehmer wieder zur Verfügung.
6) Die Abrechnung soll per Maschinenstunde (60 Min. = 250,00 DM) zuzügl. Der gesetzlichen Mehrwert Steuer von 15 % erfolgen.
7) Geplant ist eine gesamt Arbeitszeit per Tag von ca. 9 Std. davon 7 Maschinenstd.

### Zukunftsplanung:

Geplant ist das in Zukunft die Maschine das Material in Eigens für diesen Zweck gebaute Silos füllt und sich der Unternehmer dann individuell sein Material abfüllen und mischen kann. Auch hat der Unternehmer hierdurch der Lagerplatzeinsparung im Betrieb.

Die oben genannten Silos sind dann bei uns im Verleih erhältlich.

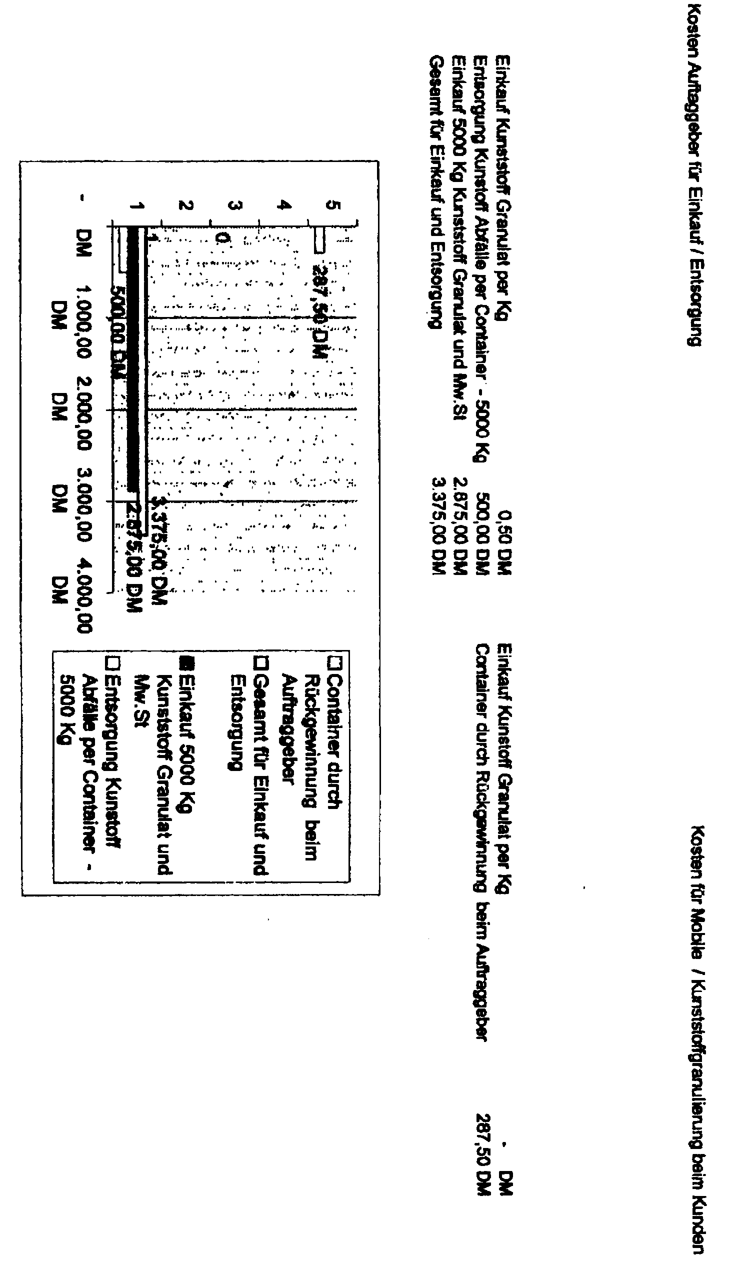

| Verdienst Kalkulation im Monat | | |
|---|---|---|
| Preis je Maschienenstunde | 250,00 DM | |
| Abzüglich kalkulierter Kosten per Stunde | | 40,00 DM |
| Mehrwert Steuer 15% | 37,50 DM | |
| Preis je Maschienenstunde incl Mw.St 15 % | 287,50 DM | |
| Verdienst per Maschienstunde Brutto und abzüglich kalkulierter Kosten per Stunde | **210,00 DM** | |
| Kalkulierte Kosten per 7 Maschienstunden | | 280,00 DM |
| Verdienst Kalkuliert 7 Maschienstunden abzüglich kalkulierter Kosten per Stunde | **1.470,00 DM** | |
| Kalkulierte Kosten per 24 Tage/Monat | | **6.720,00 DM** |
| Verdienst per 7 Maschienenstunden per Tag und gerechnett auf 24 Tage | **35.280,00 DM** | |

| **Weiter Kosten per Monat** | | |
|---|---|---|
| Telefon | | -200,00 DM |
| Mitarbeiter | | -4.500,00 DM |
| Oel und Diesel für Lkw / Stromagregat | | -1.000,00 DM |
| Werbung in den Fachzeitschriften | | -1.000,00 DM |
| Kalkulierte Kosten per 24 Tage / Monat | | 6.720,00 DM |
| **Kostendeckung durch Kalkulierte Kosten** | | **20,00 DM** |

| **Einkommensplanung für den Inhaber ohne Freibeträge** | | |
|---|---|---|
| Einkommen per Monat Brutto | 10.000,00 DM | |
| Einkommenssteuer 25 % | 2.500,00 DM | |
| Kirchensteuer 9 % | 900,00 DM | |
| Solidaritätzuschlag 5,5 % | 550,00 DM | |
| Sozialversicherung / Krankenversicherung ca. | 1.100,00 DM | |
| **Verdienst ca. Netto** | **4.950,00 DM** | |

### Mobile Recyklingeinheit Typ A

Die Erfindung bezieht sich auf Kunsstoffgranurliermaschienen, die auf Mobilenträgern wie Lastkraftwagen montiert ihren Einsatz finden

Kunststoffgranuliermachienen sind derzeit stationär verfügbar dort wird der vorliegende Kunststoffabfall sortiert und geschmolzen. Das nun flüssige Kunststoffwird dann über zwei übereinander liegende Siebe die sich entgegen gesetzt zueinander bewegen laufengelassen wobei sich das zweite Sieb unter der Wassseroberfläche eines Wasserbeckens befindet. Im Anschluß daran wird das nun zurückgewonnen Granulat aus dem Wasserbecken herausgefilter und getrocknet.

Gegenstand der vorliegenden Erfindung ist eine Kunstoffgranuliermaschiene die mobil beim Großverbraucher von Kunststoffen beziehungsweise Hersteller von Kunststofferzeugnissen Ihren Einsatz finden soll. Außerdem war es mir bei diesem Projekt sehr wichtig auf das Einschmelzen des Kunstsstoffabfalls, das ein ungeheureres Energieaufkommen verlangt, verzichten zu können.

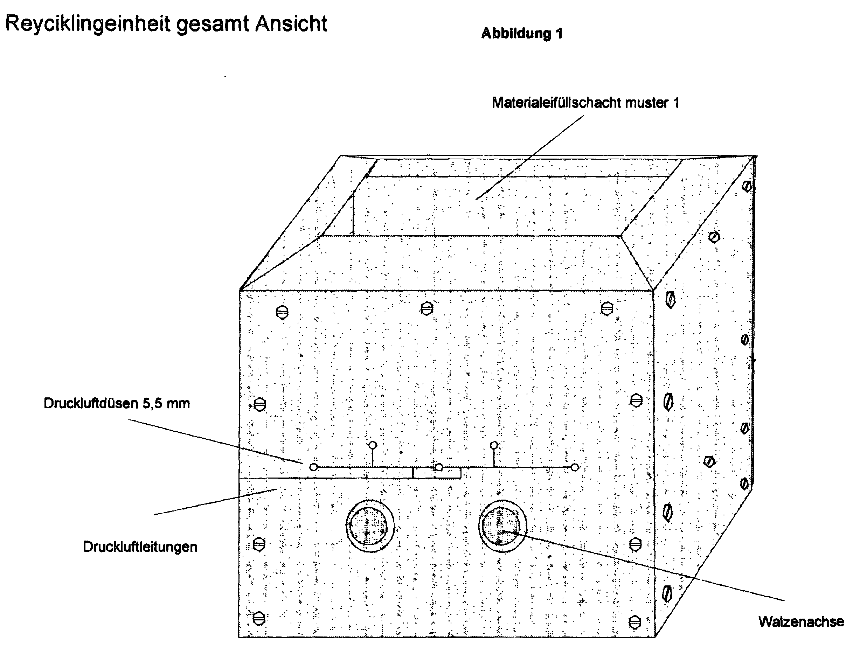

Neben dem obengenannten Vorteil ist auch die Belastung des Wassers ein besonderer Aspekt meiner Erfindung da die Kühlung wie in Abbildung 1 zusehen über Druckluft durchgeführt wird.

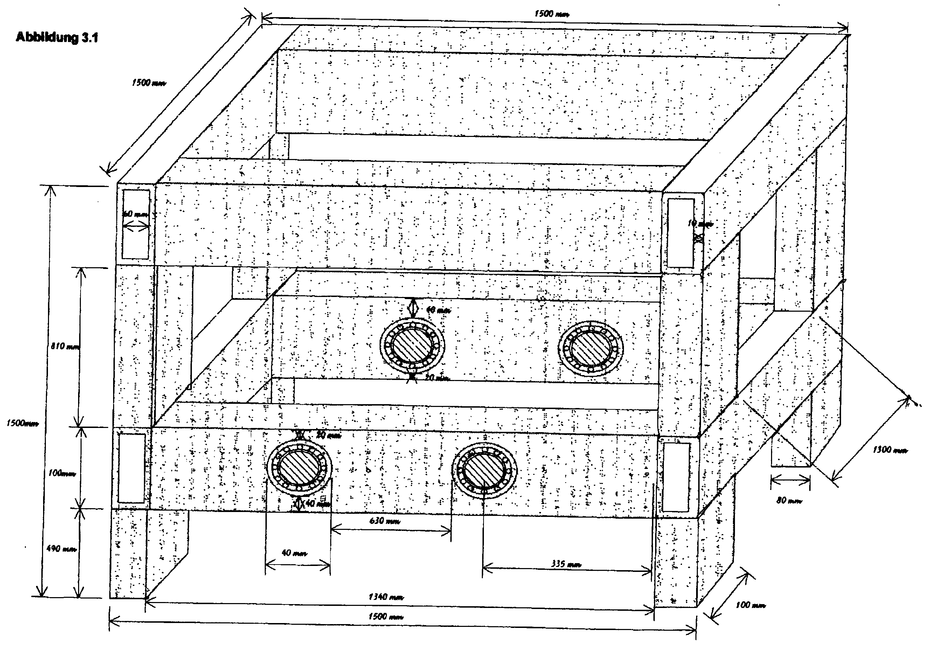

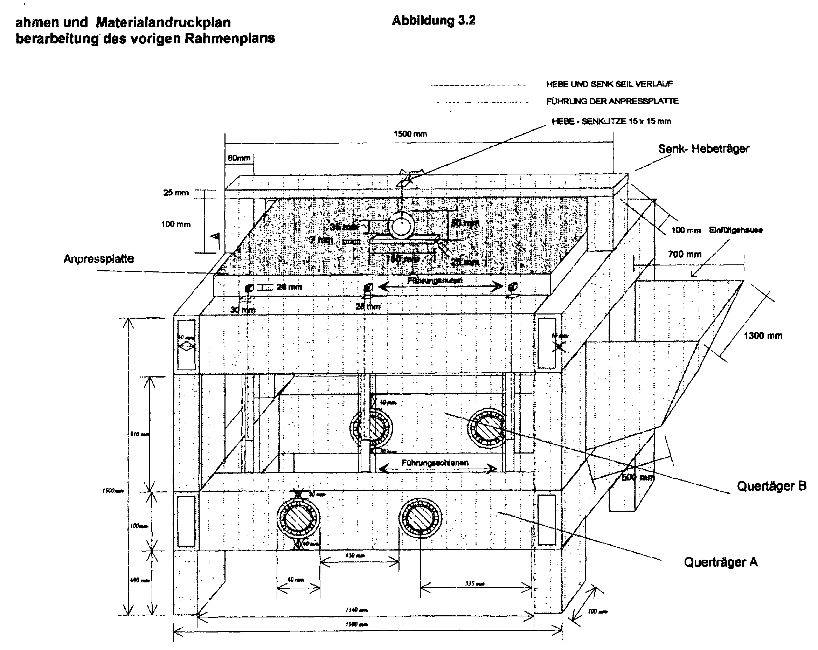

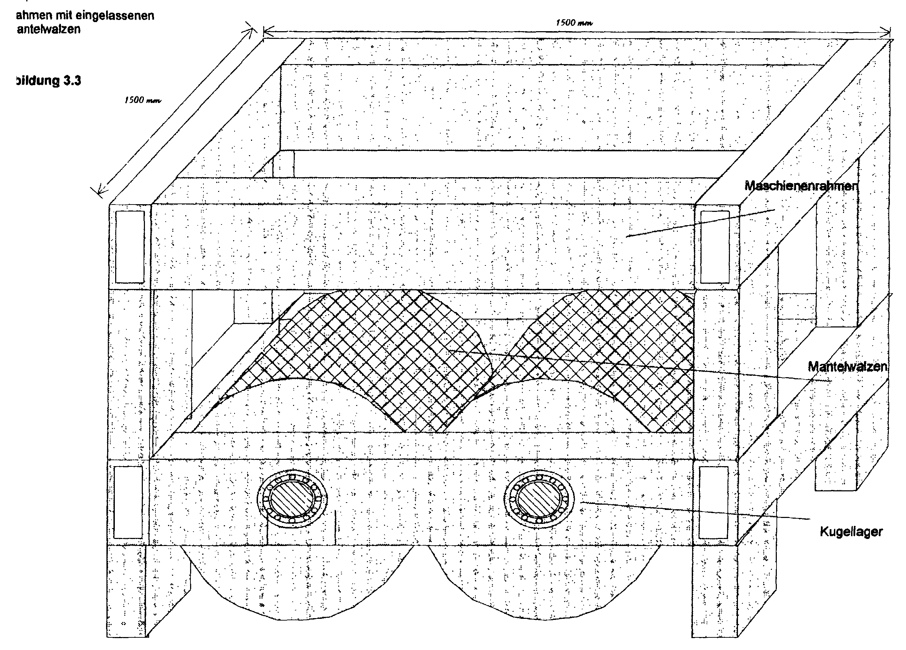

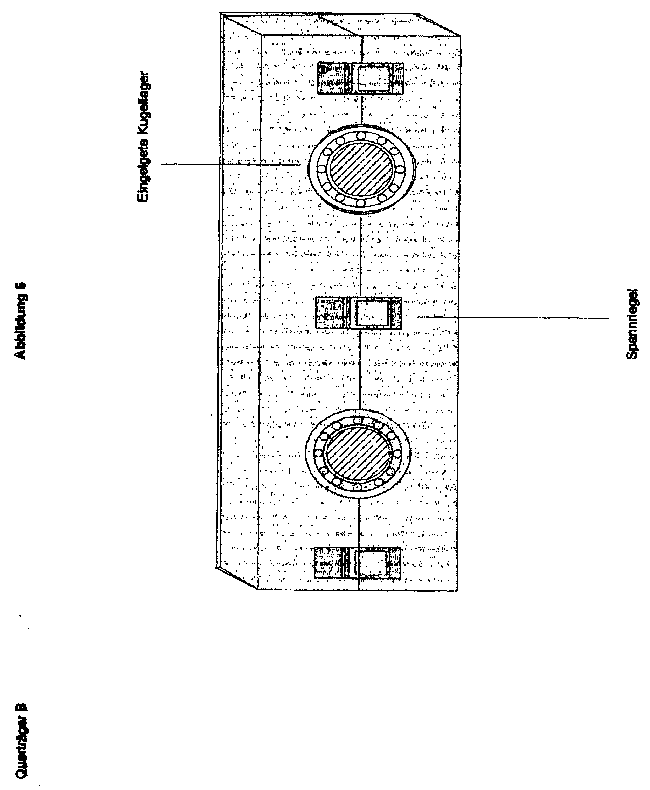

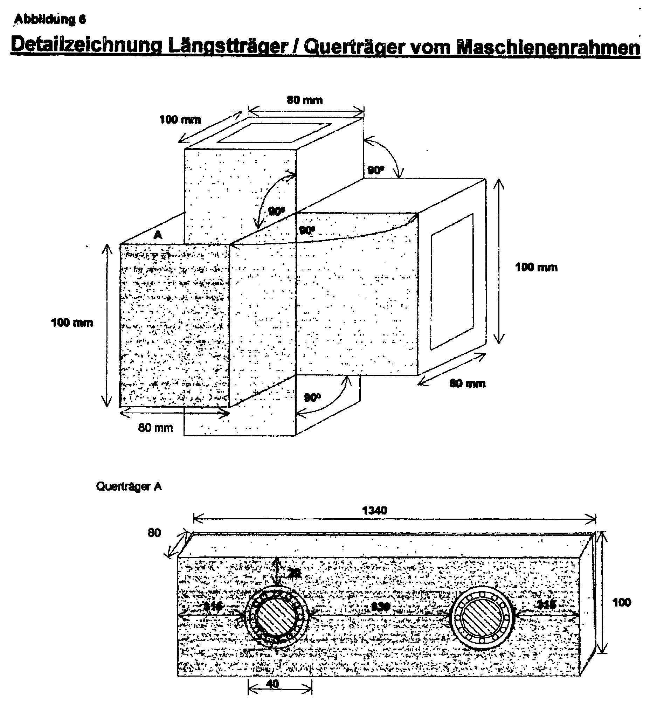

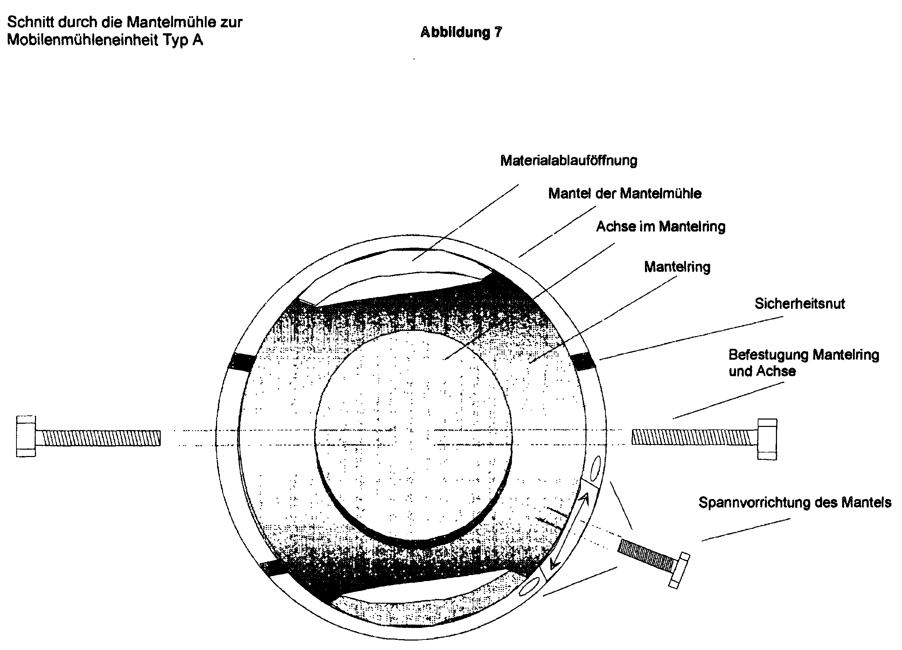

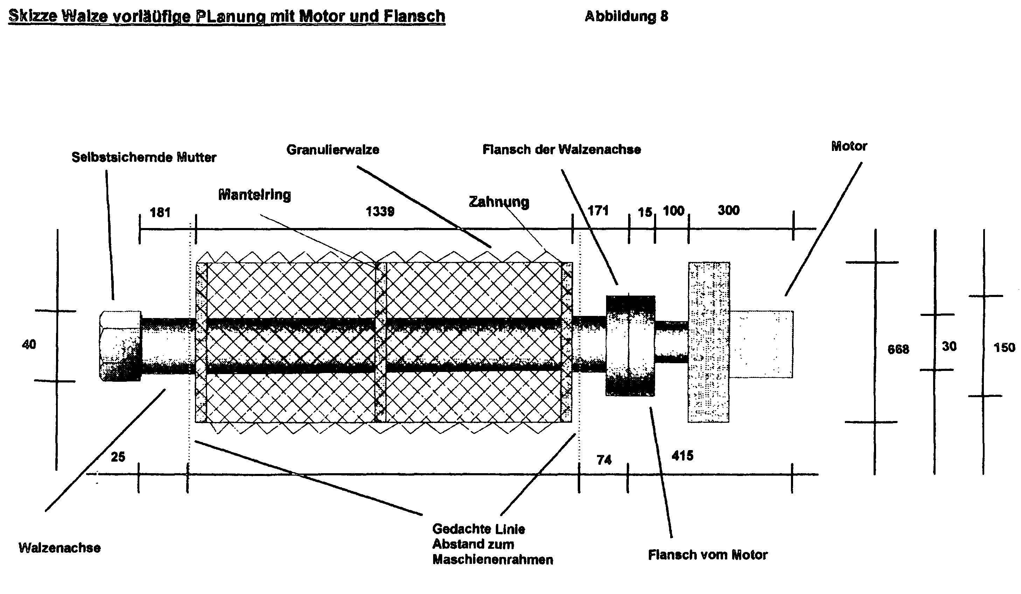

Gegenstand der Erfindung ist eine Mobile Recyklingeinheit Typ A des oben aufgeführten Typs, die Mantelwalzen (Abbildung 7 und 8 ) werden mit einem Gefälle in Querträger A ( Abbildung 6) und Querträger B ( Abbildung 5 ) in den Rahmen eingesetzt. Die auf den Mantel angebrachte Zahnung drückt das Material in die Öffnungen der gegenüber liegenden Mantelwalze ( Siehe Abbildung 3.3 ) das so erreichte Granulat läuft in der Mantelwalze durch das Gefälle und durch die Drehbewegung der Mantelwalze nach außen aufeine seitlich angebrachte Rutsche und wird dort in klare Kunststoffsäcke gefüllt. Der Druck der das Material zur Granulierung benötigt wird durch eine Anpressplatte die durch Führungsschienen bis auf 3 mm über der Zahnung der Mantelwalze heruntergefahren werden kann (Abbildung 3.2 ). Gehoben und gesenkt wird die Anpressplatte über ein Stahlseil das über den Hebeträger und der Hebe - Senklize zu einer Winde mit Steuerelektonik beim befüllen der Mobilen Recyklingeinheit Typ A gesteuert wird.

Eine Erfindungsgemäße Mobile Recyklingeinheit vom Typ A weist verschieden Vorteile auf. Aufgrund das sich Zwei hole Mantelwalzen in entgegengesetzter Richtung zueinander drehen und durch die Zahnung ist es möglich auf das Einschmelzen des Kunststoffabfalls zuverzichten da der Kunststoffabfall zu Kunststoffgranulat geschnitten wird. Die dabei entstehende Hitze wird durch das einblasen von Druckluft von drei Seiten und durch die einstellbare Druckbelastung auf die Mantelwalzen erreicht, auch eine Trocknung des neuen Granulates entfällt,

Im folgenden wird die Erfindung anhand eines Beispiels und mit Bezug auf die beiliegenden Zeichnungen näher erläutert.
Abbildung 3.1 zeigt den Maschienenrahmen und den Platz zum Einbau der Kugellager hier ist deutlich zu erkennen das beim Einbau einer Mantelwalze das schon erwähnte Gefälle entsteht
Abbildung 3.2 zeigt den Maschienenrahmen mit den Hebeträger für die Anpressplatte und auch die Führung der Anpressplatte wird veranschaulicht. Auch wird das seitlich an der Maschine angebrachte Einfüllgehäuse gezeigt.
Abbildung 3.3 zeigt die Anordnung der Mantelwalzen im Maschinenrahmen

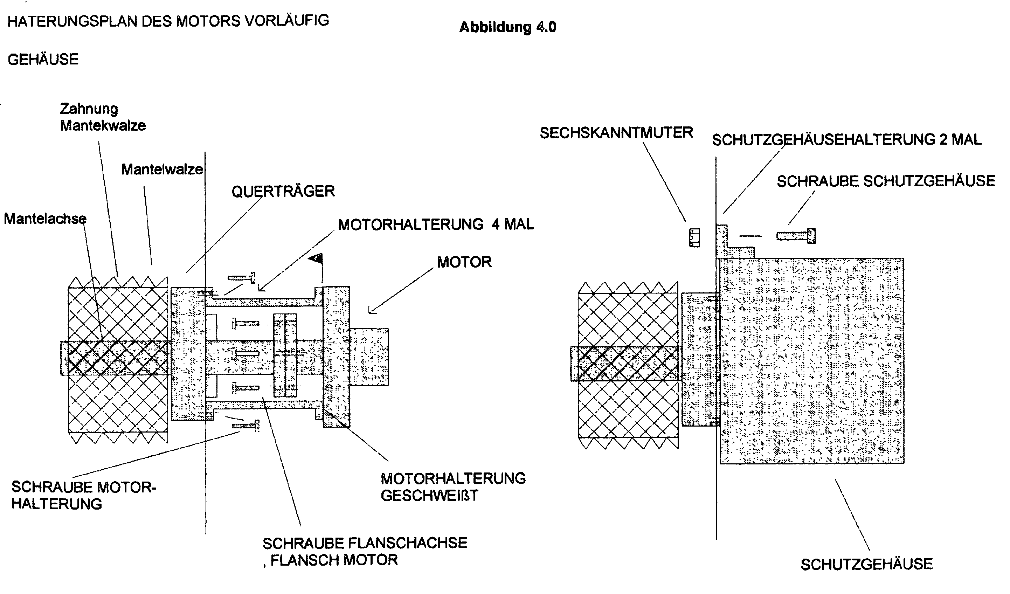

Abbildung 4.0 zeigt die Mantelwalze und Zahnung mit der Achse der Mantelachse und die Flanschung an den Motor sowie die Halterung des Motors am Querträger B und das Schutzgehäuse über den Motor.
Abbildung 5 zeigt den Querträger B der teilbar ist und durch eine Spannvorichtung ( Spannriegel) beidseitig am träger zusammengehalten wird. Die beiden Kugellager sind lose in den träger eingelegt.
Abbildung 6 zeigt Querträger A mit Kugellager für die Mantelwalze
Abbildung 7 zeigt eine Schnitt durch die Mantelwalze ohne Zahnung und durch die Mantelachse vor dem Mantelring. Der Mantelring wird mit zwei Schrauben 19 mm durch den Mantelring in die Mantelachse befestigt. Deutlich sind auch die Materialablauföffnungen im Mantelring zu erkennen. Der Mantel der Mantelmühle besteht auf rostfreiem gehärtetem Stahl, befestigt wird der Mantel der Mantelwalze übereine Spannvorrichtung des Mantels damit sich der Mantel nicht vom Mantelring schieben kamt sind in jedem Mantelring drei Sicherheitsnuten eingelassen die sich beim Spannvorgang des Mantel in die dafür vorgesehenen Öffnungen des Mantels schieben.
Abbildung 8 zeigt eine Skizze der Walze mit Motor und Flansch.

In Abbildung 9 sind nochmals alle wichtigen Zeichnungen zum besseren Verständnis aufgeführt.

Erwähnenswert ist noch das bei Anschluß einer Absaugvorrichtung auch Styropor zerkleinert werden kann.

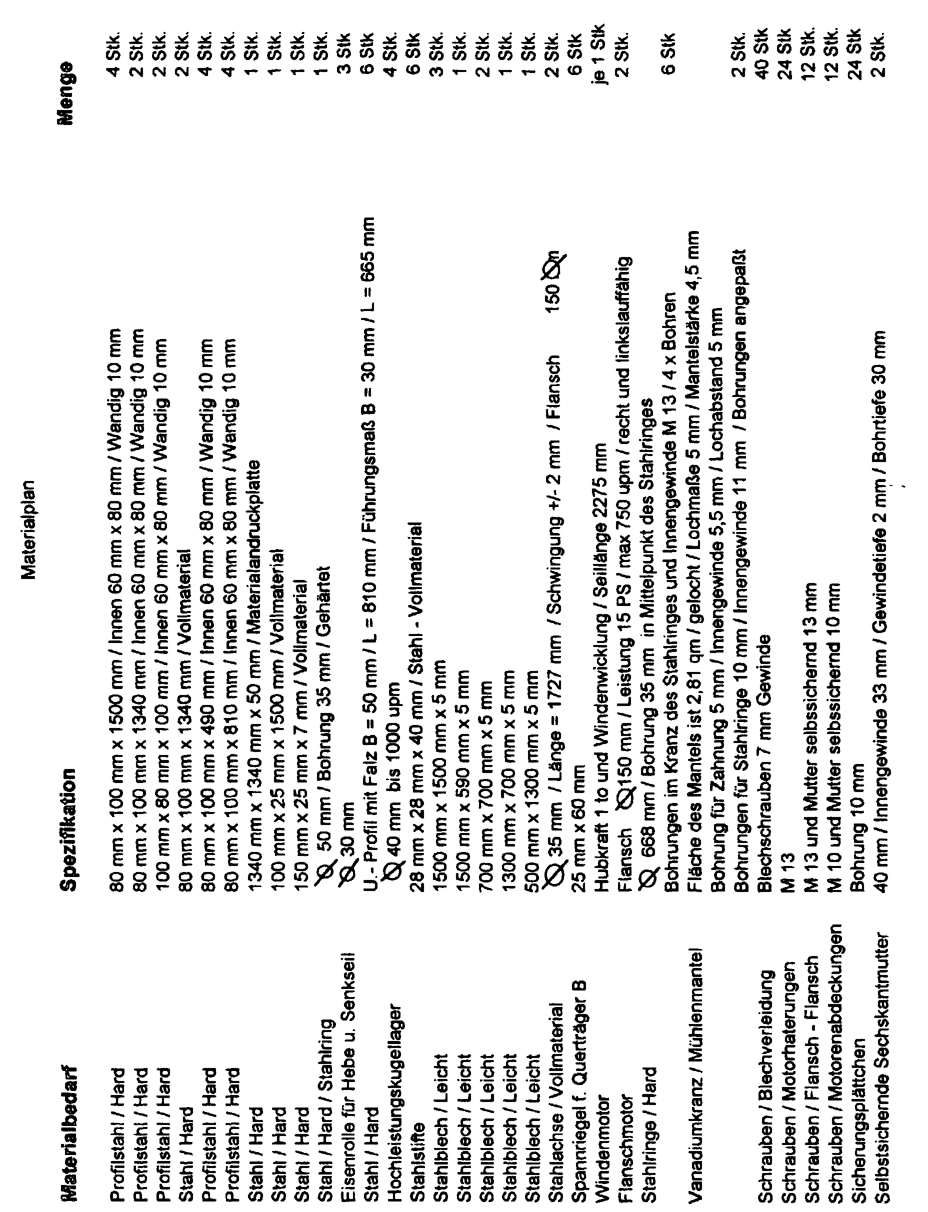

## Patentansprüche

1. Mobile Recyklingeinheit Typ A wie Abbildung 1 oder mit Materialeinfüllschacht wie zu erkennen in Abbildung 3.2 dem Maschinenrahmen wie Abbildung 3.2 der Materialanpressvorrichtung und der dazugehörigen Anpressplatte, dem Senk - Hebeträger und der Hebe Senklize wie in Abbildung 3.2 sowie dem Querträger A (Abbildung 6 ) und dem Querträger B teilbar (Abbildung 5) sowie der Mantelwalze wie in Abbildung 8 und 7 sowie die beschriebenen Spannvorichtungen sowie die beschrieben Kühlvorichtung durch Druckluftzuführ in da innere der Mobilen Recyklingeinheit Typ A
Der Patentanspruch ist nur in Zusammenhang mit der anzubietenden Dienstleistung als eine Einheit zu bewerten und sinnvoll weil derzeit das Recykling von Kunststoff über derzeitig Stationäre Unternehmen läuft. Daher richtet sich mein Patentanspruch sowohl auf die Mobile Recyklingeinheit Typ A als auch auf die Dienstleistung die Ich anbieten möchte da hiermit der Wirtschaft auch sehr viel Kapital freigemacht werden kann ( Siehe Anlagen die Sie bereit haben.)
Das Grundkonzept lautet: Kunststoffgranulierung beim Kunden um dem Kunden das zurückgewonnen Granulat wieder zur Verfügung zustellen.
Potentielle Kunden sind Unternehmen die Kunststoff Artikel herstellen oder Firmen die diese Kunststofferzeugnisse wie z.B. TV - Gehäuse, CD - Hüllen benötigen.
Daher möchte Ich dies wie ein einziges Patent anmelden.
